# EUROPEAN PATENT APPLICATION

(11) **EP 2 623 506 A1**
(43) Date of publication of application: **07.08.2013**
(21) Application number: 12153299.8
(22) Date of filing: 31.01.2012
(51) Int. Cl.: C07F 7/10, C04B 35/589

(54) **Side product reduction in a silazane cleavage method**

(71) Applicant: Max-Planck-Gesellschaft zur Förderung der Wissenschaften e.V., 80539 München (DE); Universität Stuttgart, 70174 Stuttgart (DE)
(72) Inventor: WILFERT, Jakob, 70190 Stuttgart (DE); Schurz, Fanny, 97896 Freudenberg OT Boxtal (DE); Jansen, Martin, 53127 Bonn (DE); Tellabeche, Herranz, Carlos, 69126 Heidelberg (DE); Chromik, Andreas, 73655 Plüderhausen (DE)
(74) Representative: Dey, Michael

(57) **Abstract**

The present invention relates to an improved silazane cleavage method, in particular for the production of molecular precursors for non-oxide inorganic ceramics.

## Description

The present invention relates to an improved silazane cleavage method, in particular for the production of molecular precursors for non-oxide inorganic ceramics.

Silazane cleavage reactions which are carried out batchwise have been described in the prior art (Metallo-organicheskaya Khimiya (1989), 2(3), 701-2, Kalikhman, I.D. et al.; Journal of Organometallic Chemistry (1989), 361(2), 147-55, Kalikhman, I.D. et al.; Zhurnal Obshchei Khimii (1981), 51(8), 1824-9, Sheludyakov, V.D. et al.).

Ceramics prepared from the anionic components C and N together with 2 to 4 further elements such as B, Al, Ga, In, Si, Ge, P, Ti, Zr, V, Nb, Ta, Cr, Mo, W, Fe or Zn having a cationic function are of particular interest. Such ceramics, for example consisting of Si, B, N and C, are distinguished by excellent thermal, mechanical and chemical resistance and, in terms of their combination of all applicational properties, are distinctly superior to competing materials, for example for use in heat engines. A prerequisite for achieving these advantageous properties is the creation of a network with a regular alternation of elements with an anionic and cationic function, the latter homogeneously distributed over zones of above 1 to 2 nm.

Such prerequisites may be achieved by the synthesis and provision of molecular single component precursors, which contain the particular desired combination of cationic components linked via nitrogen. These molecular precursors are then polymerised and finally ceramised by pyrolysis. Since the polymeric intermediate stages may be processed using any polymer processing method, an unusually wide range of forms of use is accessible, such as for example fibers, films, infiltrates, coatings and mouldings. The potential of this new family of materials for the production of fiber-reinforced ceramic composites is of particular significance. Unequalled properties at elevated temperatures in air and with simultaneous mechanical loading are the guarantee of potential applications. Penetration into areas occupied by metallic and conventional ceramic materials is desirable due to the numerous technical advantages, but only possible if an inexpensive production process is available.

The review article *"Amorphous Multinary Ceramics in the Si-B-N-C System"* (M. Jansen et al., Struct. Bond. 2002, 101, 137) and DE 41 07 108 A1, DE 100 45 427 A1, DE 100 45 428 A1 as well as DE 101 04 536 A1 describe syntheses for the Si/B/N/C subsystem for variants of the molecular scaffold for a single component precursor of the formula (1) RₓHal₃₋ₓSiNR¹-BR_{y}Hal_{2-y}, wherein R in each case independently represents a hydrocarbon residue with 1 to 20 C atoms, Hal in each case independently means Cl, Br or I, R¹ in each case independently represents a hydrocarbon residue with 1 to 20 C atoms or hydrogen, x = 0, 1 or 2 and y = 0 or 1.

A feature which is common to the above-described methods is that the particular target molecule is synthesised in batch mode starting from Me₃Si-NR¹SiMe₃ by two successive silazane cleavage reactions, firstly with SiHal₄₋ₓRₓ, then with BHal_{3-y}R_{y}.
1. 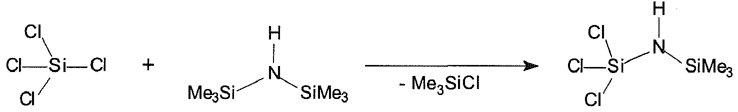
2.

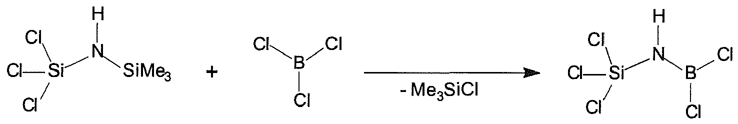

These are laboratory syntheses which cannot straightforwardly be carried out as environmentally and economically optimised production methods on an industrial scale.

The following may in particular be problematic:
1. Reaction times for the first silazane cleavage are between 20 and 48 hours, for the second approx. 12 hours per batch. Satisfactory space-time yields thus cannot be achieved via this route.
2. If reaction temperatures are increased, selectivity declines and undesired byproducts such as RₓHal₃₋ₓSi-NR¹-SiHal₃₋ₓRₓ or Me₃Si-NR¹-SiHal₂₋ₓRₓ-NR¹-SiMe₃ may be formed.
3. Large excesses of costly starting materials have hitherto been necessary, the costs of which impair the economic viability of the method.
4. Synthesis by the "batch" method is comparatively uneconomic, since each reaction batch is preceded by a time-consuming and costly provision of an inert atmosphere in the reaction apparatus.
5. High costs are generated by the necessary cooling during synthesis and by the isolation and purification of the product by distillation processes.

DE 100 45 428 A1 describes an alternative preparative route to yield the above defined single component precursors, according to which an amine component R¹NH₂ is reacted in succession with a silane component SiHal₄₋ₓRₓ and a borane component BHal_{3-y}R_{y}:
1. 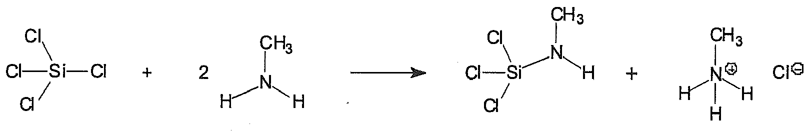
2.

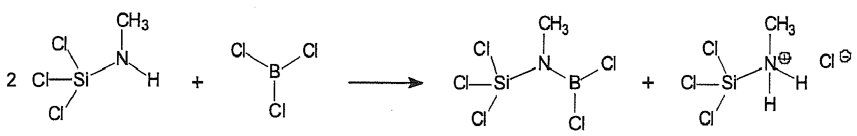

In this sequence of two successive aminolysis reactions, the formation of difficult to separate hydrochlorides, which inevitably occurs in both steps, is disadvantageous and additionally considerably diminishes product yield relative to the introduced material. Nonetheless, this approach has made it possible to achieve a continuous production method, in which the reactor is cycled between a production phase and a regeneration phase (stripping of hydrochlorides) (DE 102 28 990 A1).

While the described method already yields good results, it still exhibits disadvantages from a technical and economic standpoint:
1. The space-time yield is reduced by the intermittent mode of operation. The only remedy is to install a parallel reactor (so increasing capital investment).
2. Half of the amine starting component and half of the silylamine intermediate stage are bound as hydrochlorides and discharged during the regeneration cycle. This considerably reduces the yield of final product relative to the valuable feed materials.
3. The target products require elaborate isolation and purification.
4. Residues of intermediate and final product are pyrolysed during thermal stripping and accordingly result in reactor fouling over long-term operation.

Many compounds of interest and in particular molecular single component precursors for non-oxide ceramics may be produced by silazane cleavage reactions. Hitherto known batch methods, however, exhibit the disadvantages discussed above. At present a continuous production of single component precursors is hard to achieve or not at all, since the byproducts arising from these reactions lead to a fouling of the reactor. In case of DMTA, e.g. a filter is applied, wherein deposites are collected and subsequently sublimated by heating.

It was accordingly an object of the present invention to provide a method for cleaving silazane compounds which at least partially overcomes the disadvantages of the prior art. In particular it was an object to provide a method in which deposits of byproducts resulting in a fouling of the reactor can be avoided.

The invention relates to a method for cleaving silazane compounds, wherein an inert solvent is added. According to the invention, it was discovered that by addition of an inert solvent it can be avoided that deposites and byproducts, which cannot be prevented completely, accumulate in the reaction vessel. An inert solvent is particularly understood to be an inert solvent which does not participate in the silazane cleaving reaction. Silazanes are silicon-nitrogen compounds which comprise an Si-N bond. Element-N compounds can be synthesised by silazane cleavage.

According to the invention, the inert solvent is preferably selected to have a similar boiling point as the educts and/or products. In particular, a solvent is employed having a boiling point of not less than the boiling point of the product minus 50 K in particular not less than the boiling point of the product minus 20 K. Preferably, a solvent is employed having a boiling point of not less than the boiling point of the product minus 10 K and particularly preferably an inert solvent having a boiling point of not less than the boiling point of the product. In a further preferred embodiment, an inert solvent is employed having a boiling point which is at least 10 K, particularly preferably at least 20 K higher than the boiling point of the product.

In a further preferred embodiment, the inert solvent exhibits a higher boiling point than the main product and also than the byproducts. Preferably, it exhibits a boiling point which is 10 K higher than that of main and byproduct. Particular preferred are solvents having a boiling point above the boiling points of the product which form a protective film in the reactor and dissolve byproducts. Preferably used as inert solvents are oranic solvents, in particular organic solvents having a boiling point of ≥ 30°C, preferably ≥ 35°C, more preferably ≥ 40°C and particular preferred ≥ 50°C and even more preferred ≥ 70°C. Preferred are hydrocarbons exhibiting at least 5 carbon atoms, preferably alkanes with at least 5 hydrocarbon such as particularly pentane, hexane, heptane, octane and their isomers or aromatic solvents, such as, for example, toluol.

According to the invention, in a silazane cleavage method an inert solvent is added. Thereby, it is possible to add the inert solvent prior to the reaction, during the reaction or after the reaction to the already formed products. It is, for example, possible to add inert solvents in a targetted manner to places in the reactor, where product condensation may occur due to the temperature situation. Preferred, according to the invention, is a method wherein the solvent is added prior or during the silazane cleavage method. Particularly preferred, the solvent is added together with one of the educts. A particular embodiment of the invention therefore relates to a silazane cleavage method, wherein an inert solvent is added to the reactants.

According to the invention, preferably a solvent is employed which can also be used for storing and/or further processing of the products, particularly one-component precursors, formed during the silazane cleavage method, upon removal of excess educts as well as upon removal of byproducts having a boiling point lower than the product itself.

Preferably, a solvent, which is inert in the reaction, is added to the reaction mixture, wherein the deposites formed are dissolved and, hence, a fouling of the reactor is avoided by the solvent dissolving the deposites. Moreover the solvent forms a protection layer in the reactor. Thus no residual seeds can be formed, which may lead to a gradual fouling of the reactor. Adding the solvent can either be induced together with the reaction partners or separately. An inert solvent is in particular a solvent which does not react with the educts and products of the silazane cleavage reaction. By adding the solvent it is possible and preferred to perform a continuous production. However, the method described herein can also be applied in a batch mode.

There are already several patent applications relating to the continuous production of preceramic polymers, however, therein an addition of solvents was not considered. With previous methods it is difficult or impossible to establish a continuous method, since in the production of TADB, e.g. a conversion of 100% never takes place and, thus, deposit formation inevitably occurs. According to the invention, byproducts are still formed, however, they no longer interfere due to the addition of solvents. Since in the reactions there is no 100% conversion, a formation of deposits in byproducts cannot be avoided. There are patent applications which are aimed at avoiding byproducts leading to deposit formation. These side reactions can be consciously accepted according to the invention, as they cannot be avoided by 100%, but they do not interfere because of the method described herein.

In a particularly preferred embodiment, the invention relates to a silazane cleavage method comprising two silazane cleavage reactions for the production of a compound, which comprises the structural feature Si-N-B comprising the steps reacting a silazane compound having at least two Si-N-bonds, in particular reacting a compound of the formula (3) R²₃SiNR¹SiR³₃, in which R² and R³ in each case independently represent a hydrocarbon residue with 1-20 carbon atoms and R¹ represents hydrogen or a hydrocarbon residue with 1-20 C atoms, with a compound of formula SiHal_{4-y}R_{y} in which y = 0.1 or 2, Hal is selected from F, Cl, Br and I and R represents hydrogen or a hydrocarbon residue with 1-20 C atoms, and subsequently with a compound of the formula BHal₃₋ₓRₓ, in which x = 0 or 1, Hal is selected from F, Cl, Br and I and R respresents hydrogen or a hydrocarbon residue with 1-20 C atoms. In this most preferred method two subsequent silazane cleavage reactions are performed. In the first step thereby the starting silazane compound is converted with a silane compound. Preferably SiCl_{4-y}R_{y}, particularly preferably SiCl₃CH₃ or SiCl₄ and most preferably SiCl₄ is employed. As disilazane composition preferably HMDS (hexamethyldisilazane) is employed. The first reaction step takes place according to the invention in the most preferred embodiment at elevated temperatures, particularly at temperatures > 20°C, in particular, ≥ 40°C, more preferred ≥ 50°C and most preferred ≥ 60°C. Further, this first reaction step is preferably performed in the liquid phase. This reaction procedure of the first step increases the efficiency. Further, thus formation of undesired byproducts is minized.

In the second reaction step of the most preferred embodiment of the invention the product obtained in the first step is reacted with BHal₃₋ₓRₓ, in particular with BCl₃₋ₓRₓ and most preferred with BCl₃. Preferably, according to the invention at least in this second reaction step an inert solvent is added. By adding an inert solvent, in particular an alkane having at least 5 C-atoms such as hexan or an aromatic solvent such as toluol, formation of byproducts is reduced and formed byproducts are removed from the process. Thus, fouling of the reactor can be avoided. In a particular preferred embodiment the second step is performed in the gas phase. Particularly preferably the starting materials in gaseous form are introduced in the reactor in the same direction (co-currently). Hence, a further reduction of the formation of byproducts is achieved.

Contrary to the most preferred embodiment of the invention, performing the second step in counterflow produces significant amounts of byproducts which block the reactor in short time.

However, according to the invention it is also possible to perform both silazane cleavage reactions in liquid phase. To maintain all components in liquid phase, in this embodiment it is preferably worked in a pressure range of up to 100 bar, in particular of up to 50 bar, more preferably up to 30 bar and even more preferably up to 15 bar and at least 1 bar, more preferably at least 5 bar and even more preferably at least 10 bar.

With the method according to the invention the reactor remains clean and a continuous reaction procedure can be performed.

After having explained the most preferred embodiment of the invention, in the following the invention in general and the advantages obtained therewith are illustrated.

It is an essential feature of the present invention that an inert solvent is added in particular to the reactants of a silazane cleavage method.

The silazane cleavage method of the invention can be performed in the gas or liquid phase under atmospheric pressure or excess pressure and at temperatures of from -70°C to +300°C, depending on the reaction step and solvent used. Therefore, this method can be applied to any plant.

The plants previously described in patent applications aim at removing the byproducts between reaction steps. In the method according to the invention, these byproducts can be consciously accepted. Depending on the desired purity of the final products, no purification steps are necessary at all.

In particular, the end product can be stored or further processed in the inert solvent.

According to the invention silazane cleavage may be carried out continuously, so making it possible to overcome the disadvantages with regard to a poor space-time yield. It has been found that a continuous mode of operation of the method is in particular advantageous. A continuous mode is also possible if both educts introduced for the silazane cleavage reaction are employed in liquid form. However, it is also possible to employ the inert solvent in a discontinuous or semi-continuous silazane cleaving method.

In a preferred embodiment both educts are introduced in liquid form at elevated temperatures, in particular at temperatures of ≥ 20°C, more preferred ≥ 30°C, even more preferred ≥ 50°C. It is further preferred to employ the components under excess pressure, particularly ≥ 1.2 bar, more preferred ≥ 1.5 bar, in particular preferred ≥ 2 bar and even more preferred ≥ 10 bar. Under these reaction conditions the reaction time can be reduced significantly, e.g. to one hour or less.

A further improvement of the method can be achieved by adding additional inert solvent to the product.

A further improvement of the continuous method according to the invention may be achieved by removing the target product and/or undesired secondary products from the reaction mixture and thus from the equilibrium. The target product may be isolated from the remaining components of the reaction mixture for example by crystallisation, condensation and/or using a solvent. Secondary products, in particular highly volatile secondary products, are preferably removed from the reaction mixture by partial condensation, distillation, pervaporation, gas permeation or adsorption. Phase separation between the condensate phase and gas phase preferably proceeds in an inertial separator or in a cyclone. Using a continuous mode of operation, it is in particular possible to achieve elevated selectivity with regard to the desired target products. Selectivity may further be ensured by carrying out the reaction with one of the educts in excess, in particular in an at least 1.5 times, more preferably an at least 2 times excess.

Overall, using the method according to the invention, the feed materials may be virtually quantitatively converted into the desired target compounds.

In a preferred embodiment of the present invention, silazane cleavage is used to produce compounds having the structural feature N-Y. The invention therefore in particular relates to a method comprising at least one silazane cleavage reaction for the production of a compound which comprises the structural feature N-Y, in which Y is in each case independently selected from Si, B, Al, Ga, In, Ge, P, Ti, Zr, V, Nb, Ta, Cr, Mo, W, Fe or Zn, wherein a silazane compound is reacted with a compound of the formula (2) selected from

SiHal_{4-y}R_{y}, BHal₃₋ₓRₓ, AlHal₃₋ₓRₓ, GaHal₃₋ₓRₓ, InHal₃₋ₓRₓ, GeHal_{4-y}R_{y}, PHal₃₋ₓRₓ, PHal_{5-z}R_{z}, TiHal_{4-y}R_{y}, ZrHal_{4-y}R_{y}, VHal₃₋ₓRₓ, VHal_{4-y}R_{y}, NbHal_{5-z}R_{z}, TaHal_{5-z}R_{z}, CrHal₃₋ₓRₓ, MoHal_{4-y}R_{y}, MoHal_{5-z}R_{z}, WHal_{6-z}R_{z}, FeHa₃₋ₓRₓ or ZnCl₂ in which x = 0 or 1, y = 0, 1 or 2 and z = 0, 1, 2 or 3, Hal is selected from F, Cl, Br and I, and R represents hydrogen or a hydrocarbon residue with 1 to 20 C atoms.

Unless otherwise specified throughout this description particular preferred meanings for the parameters are as follows:
x = 0,
y = 0,
z = 0,
Hal = Cl and
R represents hydrogen or a hydrocarbon residue with 1 to 7 C atoms, more preferably 1 to 2 C atoms and most preferably R = CH₃.

The term hydrocarbon residue, as described herein, relates to residues consisting only of carbon and hydrogen atoms.

Preferably, the compound of formula (2) is SiHal_{4-y}R_{y} or BHal₃₋ₓRₓ, in particular SiHal_{4-y}R_{y}.

In one preferred embodiment a silazane compound is reacted with SiHal_{4-y}R_{y}, in particular SiCl_{4-y}R_{y} and preferably with SiCl₄. Thereby the Si-N-bond of the silazane compound is cleaved and a new Si-N-bond is formed. By this reaction halogens bonded to the Si, in particular chloro-groups are inserted into the product. These chloro-groups are particularly advantageous for a further reaction of the product composition formed, for example a further reaction to polymers or ceramics by aminolysis. The conversion of a silazane compound with a silane compound is performed according to the invention preferably in liquid phase. The conversion is further preferred at elevated temperatures and/or under elevated pressure.

In a further preferred embodiment a silazane is reacted with BHal₃₋ₓRₓ, in particular BCl₃₋ₓRₓ, and preferrably BCl₃. In this reaction the Si-N-bond of the silazane is cleaved and a B-N-bond is formed. The conversion of a silazane with a borane is performed according to the invention preferably in the gas phase. Further, this reaction is preferably in co-current flow and not in counterflow. However, also this reaction step can be performed in liquid phase, preferably at pressures of 10 bar and higher.

A particularly preferred embodiment is a method for the production of a compound which comprises the structural feature X-N-Y, in which X and Y in are each case independently selected from B, Si, Al, Ga, In, Ge, P, Ti, Zr, V, Nb, Ta, Cr, Mo, W, Fe or Zn, comprising the steps
reacting a silazane compound, preferably a disilazane compound and in particular a compound of the formula (3) R²₃SiNR¹SiR³₃,
in which R² and R³ in each case mutually independently represent a hydrocarbon residue having 1-20 carbon atoms and R¹ represents hydrogen or a hydrocarbon residue having 1-20 C atoms,
in succession in any desired order with a compound of the formula (2), selected from
SiHal_{4-y}R_{y}, BHal₃₋ₓRₓ, AlHal₃₋ₓRₓ, GaHal₃₋ₓRₓ, InHal₃₋ₓRₓ, GeHal_{4-y}R_{y}, PHal₃₋ₓRₓ, PHal_{5-z}R_{z}, TiHal_{4-y}R_{y}, ZrHal_{4-y}R_{y}, VHal₃₋ₓRₓ, VHal_{4-y}R_{y}, NbHal_{5-z}R_{z}, TaHal_{5-z}R_{z}, CrHal₃₋ₓRₓ, MoHal_{4-y}R_{y}, MoHal_{5-z}R_{z}, WHal_{6-z}R_{z}, FeHal₃₋ₓRₓ or ZnCl₂
in which x = 0 or 1, y = 0, 1 or 2 and z = 0, 1, 2 or 3, Hal is selected from F, Cl, Br and I, and R represents hydrogen or a hydrocarbon residue with 120 C atoms,
and a compound of the formula (4) selected from
BHal₃₋ₓRₓ, SiHal_{4-y}R_{y}, AlHal₃₋ₓRₓ, GaHal₃₋ₓRₓ, InHal₃₋ₓRₓ, GeHal_{4-y}R_{y}, PHal₃₋ₓRₓ, PHal_{5-z}R_{z}, TiHal_{4-y}R_{y}, ZrHal_{4-y}R_{y}, VHal₃₋ₓRₓ, VHal_{4-y}R_{y}, NbHal_{5-z}R_{z}, TaHal₅₋₇R_{z}, CrHal₃₋ₓRₓ, MoHal_{4-y}R_{y}, MoHal_{5-z}R_{z}, WHal_{6-z}R_{z}, FeHal₃₋ₓRₓ or ZnCl₂
in which x = 0 or 1, y = 0, 1 or 2, z = 0, 1, 2 or 3, Hal is selected from F, Cl, Br and I, and R represents hydrogen or a hydrocarbon residue with 1-20 C atoms.

In this embodiment, two silazane cleavage reactions are carried out. The first step, i.e. reaction with a compound of formula (2) is preferably performed in liquid phase. In the second step, the compounds of the formulae (3) and (4) are preferably present in *gaseous* form, however, they can also be employed in liquid form.

In a particularly preferred embodiment the compound which comprises the structural feature Si-N-B is produced by reacting a silazane compound with a compound of formula (2), selected from SiHal_{4-y}R_{y} and subsequently with a compound of formula (4), selected from BHal₃₋ₓRₓ. Such compounds may be used as molecular single component precursors for non-oxide ceramics. The method is suitable for the production of molecular single component precursors for non-oxide ceramics and may be carried out continuously. The reaction of the silazane compound with a compound of the formula (2) preferably proceeds in the liquid phase. The product of the second silazane cleavage is obtained in liquid form, whereby the desired product may be produced inexpensively and on a large scale.

The method for the production of compounds with the structural feature X-N-Y, in particular of compounds with the formula (1) R_{y}Hal_{3-y}Si-NR¹BRₓHal₂₋ₓ proceeds via a two-fold silazane cleavage from a silazane compound having at least two Si-N bonds, in particular from R²₃SiNR¹SiR³₃ (3).

In formula (3), R² and R³ may preferably in each case independently represent a hydrocarbon residue having 1-7 C atoms, in particular an alkyl and/or aryl residue with 1-7 C atoms, preferably a methyl residue. R¹ preferably represents hydrogen or a hydrocarbon residue having 1-7 C atoms.

The silazane cleavage according to the invention and in particular the reaction of a compound of the formula (3) with a compound of the formula (2) preferably proceeds at temperatures of -100°C to 300°C, more preferably at temperatures of > 25°C and < 100°C, still more preferably at temperatures of ≥ 50°C and most preferably at temperatures ≥ 70°C. Furthermore, a suitable pressure is established to ensure that the compound of the formula (3), is liquid or gaseous as required, preferably liquid and the compounds of the formulae (2) and (4) are liquid or gaseous, preferably liquid, wherein pressures of 0.1 mbar to 100 bar, preferably of 0.1 bar to 50 bar and in particular of 1 bar to 15 bar are conventionally used.

In order to achieve a maximally quantitative conversion into the desired products, the silazane compound, in particular a compound of the formula (3), is preferably reacted with an excess of compounds of the formula (2) and/or a excess of compounds of the formula (4). Compounds of the formula (2) and/or compounds of the formula (4) are preferably introduced in an amount of at least 1.1 times, more preferably at least 1.2 times, still more preferably at least 1.5 times, and most preferably at least 2 times greater than the silazane compound.

As inert solvent according to the invention preferably an aprotic organic solvent is applied. Preferred solvents are in particular hydrocarbons having at least 5 C-atoms, e.g. pentane, hexane, heptane, octane, isomers thereof or aromatic solvents, such as toluol.

According to the invention, the inert solvent is preferably used in an amount of ≥ 1 wt%, more preferred ≥ 5 wt%, even more preferred ≥ 20 wt% and still more preferred ≥ 40 wt% and up to 90 wt%, preferred < 70 wt%, related to the total weight of the starting compositions, i.e. the silazane compound and the compound of the formula (2) or formula (4). The solvent can be mixed already with the starting materials or it can be added to the reaction separately.

Additionally, by selecting the solvent further processing of the single component precursors can be ensured. For example, alkanes having longer chains may be used, which are solid at ambient temperatur, but become liquid/gaseous upon heating, depending on the process. This way, the single component precursors can be "packed" airtight, e.g. in paraffin.

In a preferred embodiment of the method according to the invention, pressure and temperature are adjusted such that the final product is in liquid form. In this mode of operation of the method, the final product may straightforwardly be separated from the method in condensed form. Separation may, for example, proceed by crystallisation, condensation and/or the use of a solvent. The product is preferably separated and recovered from the equilibrium by condensation.

With the addition of an inert sovlent it is possible to remove secondary products, to the extent that any are formed from the reaction mixture. One secondary product often formed during the reaction is R₃SiHal, for example Me₃SiHal.

Isolation of the reaction product or separation of secondary products may advantageously proceeds by means of phase separation between the condensate phase and gas phase, for example in an inertial separator or in a cyclone.

In a preferred embodiment, the method according to the invention is carried out as a reactive distillation.

In order to achieve maximally quantitative conversion of the feed materials into the target compounds, unreacted feed materials or educts are advantageously returned to the process.

The invention in particular relates to a continuous mode of operation of two or more successive silazane cleavage reactions in a circuit of closed flow apparatuses without intermediate isolation or storage of the intermediate. The only secondary product to arise is R²₃SiCl or R³₃SiCl, which, by reaction with R¹NH₂, may be returned into the educt R²₃SiNR¹SiR³₃. One particularly advantageous aspect of the method is that no salts arise as secondary products.

In a preferred embodiment of the invention, in a first stage, a compound of formula (2), preferably SiHal₄₋ₓRₓ, reacts with a silazane compound, in particular a compound of the formula (3), preferably Me₃SiNR¹SiMe₃, in the liquid phase at temperatures of from 20°C to 300°C and pressures in the reaction volume of from 1 bar to 100 bar, and specifically in each case under p/T conditions, under which the compounds of formula (2) and of formula (3) are liquid.

In a second stage, the intermediate is then reacted in a gas phase reaction with a compound of the formula (4) and specifically preferably under p/T conditions, under which the compound of the formula (4) is gaseous. The second stage is preferably carried out at temperatures of -100°C to +30°C. The intermediate and the compound of formula (4) is preferably reacted in co-current flow. An inert solvent is in particular added to the second stage. Using a cooler, the inert solvent and the product condense.

The described type of reaction may surprisingly be carried out with elevated selectivity even at elevated temperatures. This is preferably achieved by two measures:
1. An excess compound of the formula (2), preferably SiHal₄₋ₓRₓ, and more preferably SiCl₄ is always present in the reaction volume, such that the two-fold amination, for example to yield Me₃Si-NR¹-SiHal₂₋ₓRₓ-NR¹-SiMe₃ (x = 0 or 1) is suppressed.
2. The desired intermediate, for example Hal₃₋ₓRₓSiNR¹SiMe₃ is efficiently drawn off as a liquid phase or removed from the gas phase by condensation and in this way an undesired further reaction to yield Hal₃₋ₓRₓSiNR¹SiRₓHal₃₋ₓ is stopped.

If the difference in the boiling points of the feed material of the formula (2), for example SiHal₄₋ₓRₓ, and of the corresponding secondary product, for example Me₃SiHal is sufficiently large, a condenser can be located at the top of the reaction volume, on which the feed material of the formula (2), for example SiHal₄₋ₓRₓ, which has been added in excess, is separated and the secondary product, for example Me₃SiHal, is allowed to pass through in gaseous form. The educt recovered after separation of the phases, for example SiHal₄₋ₓRₓ, can be conveyed back into the reactor. In steady-state operation, fresh compounds of the formula (3), for example Me₃SiNR¹SiMe₃, and of the formula (2), for example SiHal₄₋ₓRₓ, are then supplied to the reactor in the same amount per unit time as the secondary product, for example Me₃SiHal, is removed from the reactor.

If, on the other hand, the boiling points of the feed material of the formula (2), for example SiHal₄₋ₓRₓ, and of the secondary product, for example Me₃SiHal, are very close to one another, the very different molar masses of these components (for example, molar mass of SiCl₄: 169.9; molar mass of Me₃SiCl: 108.6) may sensibly be exploited for the separation thereof. Suitable methods for this purpose are membrane methods using porous membranes or adsorption onto molecular sieves. In this case, such a suitable separation stage firstly adjoins the top of the reactor, in which the sub-stream enriched with educt, for example SiHal₄₋ₓRₓ, is condensed and returned to the process. Fresh educt, for example SiHal₄₋ₓRₓ is fed into the process in a molar quantity per unit time which corresponds to the cumulated quantity of discharged educt, for example SiHal₄₋ₓRₓ, and secondary product, for example Me₃SiHal, while fresh compounds of the formula (3), for example Me₃SiNR¹SiMe₃, are supplied to the reactor in the same amount per unit time as the secondary product, for example Me₃SiHal, is removed from the reactor.

The intermediate, for example Hal₃₋ₓRₓSiNR¹SiMe₃, is introduced into the second reaction stage in gaseous or liquid form and reacted with an excess of compounds of the formula (4), for example BCl₃. The pressure and temperature in the reactor are suitably adjusted such that the partial pressure of the secondary product, for example Me₃SiHal, is lower than the saturation vapour pressure thereof. In particular, temperatures of -100°C to 300°C and pressures of 0.1 mbar to 2 bar satisfy the stated requirements for p/T conditions. Secondary product, for example Me₃SiHal, and excess compounds of the formula (4), for example BCl₃, are drawn off from the top of the reactor. The secondary product, for example Me₃SiHal, is condensed and reused for the production of the starting materials of the formula (3), for example Me₃SiNR¹SiMe₃. The educt of the formula (4), for example BCl₃, is returned to the reactor. The final product is obtained in liquid form and may be discharged from the bottom of the reactor and, if necessary, purified by partial condensation, distillation or pervaporation.

It is also possible to separate the byproducts from the product of the second step only prior to the third step, e.g. aminolysis, via destillation in order to obtain a possibly pure final product.

The method according to the invention may in particular be used for the production of compounds which comprise the structural feature X-N-Y, in which X and Y may in each case independently be B, Al, Ga, In, Si, Ge, P, Ti, Zr, V, Nb, Ta, Cr, Mo, W, Fe or Zn. It is particularly preferably used for production of a compound which has the formula (1) R_{y}Hal_{3-y}Si-NR¹-BRₓHal₂₋ₓ, in which Hal in each case independently means Cl, Br or I, R in each case independently represents a hydrocarbon residue with 1 to 20 C atoms or hydrogen, R¹ represents a hydrocarbon residue with 1 to 20 C atoms or hydrogen, y = 0, 1 or 2 and x = 0 or 1.

The main issue during synthesis of compounds of formula (1) using two silazane cleaving reactions is the formation of byproducts in the form of solid salts. By the addition of an inert solvent according to the invention the problems involved therewith can be overcome. In a particular preferred embodiment the first reaction step, namely reaction of a disilazane, in particular of a disilazane of the formula (3) with a silane component SiHal₄₋ₓRₓ is carried out in the liquid phase. The second reaction stage, the reaction of the intermediate product of the first reaction step with a borane component BHal_{3-y}R_{y} is preferably one in the gas phase. The desired product of formula (1) can be recovered via condensation from the product flow. According to the invention, unavoidable polymeric byproducts can be washed away by passing an inert solvent in the reaction steps together with at least one of the reactants.

The desired products are preferably produced in a two-stage process.

The compounds according to the formula (1) can for example be produced by reacting a hexamethyldisilazane component (HMDS) Me₃SiNR¹SiMe₃ in succession in any desired order with a silane component SiHal₄₋ₓRₓ and a borane component BHal_{3-y}R_{y}. Preferably, in the first step, a silane component, is caused to react in a liquid phase reaction continuously or in portions, with or without a carrier gas, with the disilazane component, in particular with the hexamethyldisilazane component, which is introduced in a liquid or gaseous state of aggregation. The intermediate formed is in turn preferably further reacted in the second step with the borane component in excess in an inert solvent, preferably in the gas phase or more preferably in co-current flow. Alternatively, the intermediate may be caused to react in a liquid state of aggregation with the borane component which is present in a gaseous state. Depending on p/T conditions, the target compound is obtained in pure form or mixed with the secondary product Me₃SiCl and the excess borane component and may be isolated with a phase separator.

Using this reaction pathway, it is possible inter alia to produce the compounds MeCl₂SiNHBCl₂ (MADB) (1a), Cl₃SiNHBCl₂ (TADB) (1b), (CH₃)₂ClSiNHBCl₂ (DADB), Cl₃SiNCH₃BCl₂ (DMTA) or CH₃Cl₂SiNCH₃BCl₂ (DDMA) in pure form. In the case of MADB, methyltrichlorosilane, which is introduced in a gaseous state, and hexamethyldisilazane, which is introduced in a gaseous or liquid state of aggregation, are caused to react in the gas phase or in a gas phase-liquid phase reaction. In the case of TADB, tetrachlorosilane is used instead of methyltrichlorosilane, the reaction being carried out in analogous manner. The intermediates obtained are respectively MeCl₂SiNHSiMe₃ and Cl₃SiNHSiMe₃, which are in each case reacted in the gas phase or preferably in condensed form with gaseous trichloroborane.

In the formula RₓHal₃₋ₓSi-NR¹-BRyHal_{2-y} (1), the residues R and R¹ may in each case independently mean hydrogen or a hydrocarbon residue with 1 to 20 C atoms, preferably having 1 to 10 C atoms, more preferably having 1 to 7 C atoms. R and R¹ are independently more preferred H or CH₃, most preferred CH₃.

A hydrocarbon residue is here a residue which is formed from the elements carbon and hydrogen. According to the invention, hydrocarbon residues may be branched or unbranched, saturated or unsaturated. The hydrocarbon residue may also contain aromatic groups, which may in turn be substituted with hydrocarbon residues. Examples of preferred hydrocarbon residues are for example unbranched saturated hydrocarbon residues, such as for instance C₁ to C₂₀ alkyl, in particular methyl, ethyl, n-propyl, n-butyl, n-pentyl, n-hexyl, n-heptyl, n-octyl, n-nonyl and n-decyl. The residues R and/or R¹ may, however, also comprise branched saturated hydrocarbon residues, in particular branched C₃ to C₂₀ alkyls, such as for instance i-propyl, i-butyl, t-butyl and further branched alkyl residues. In one embodiment, the residues R and/or R¹ comprise one or more olefinically unsaturated groups. Examples of such residues are vinyl, allyl, butenyl, pentenyl, hexenyl, heptenyl, octenyl, nonenyl, decenyl, pentadienyl, heptadienyl, octadienyl, nonadienyl and decadienyl. The residues R and/or R¹ may also contain an alkyne group, thus a C≡C bond. In a further embodiment, at least one residue R and/or R¹, preferably all the residues R and/or R¹, contain(s) an aromatic group, in particular an aromatic group with 5 to 10 C atoms, in particular 5 or 6 C atoms, such as for instance a phenyl group or an aromatic group, in particular a phenyl group, substituted with a hydrocarbon, in particular a C₁ to C₁₀ hydrocarbon, such as for instance methylphenyl, dimethylphenyl, trimethylphenyl, ethylphenyl or propylphenyl. Including the substituents, the aromatic residue preferably comprises 5 to 20, in particular to 10 C atoms. The hydrocarbon residues R and R¹ may here in each case mutually independently be varied.

Preferably, at least one residue R and/or R¹ and in particular all the residues R and/or R¹ comprise(s) hydrogen, a C₁ to C₂₀ alkyl group, in particular a C₁ to C₆ alkyl group, a phenyl group, a vinyl group or an allyl group or a hydrocarbon residue with 1 to 3 C atoms, in particular methyl, ethyl or propyl and particularly preferably methyl.

The residue Hal denotes a halogen atom and in particular means Cl, Br or I, it being preferred for at least one Hal residue and preferably all Hal residues to mean Cl.

### Examples

### Example 1: Synthesis of TADB (trichlorosilylamino dichloroborane)

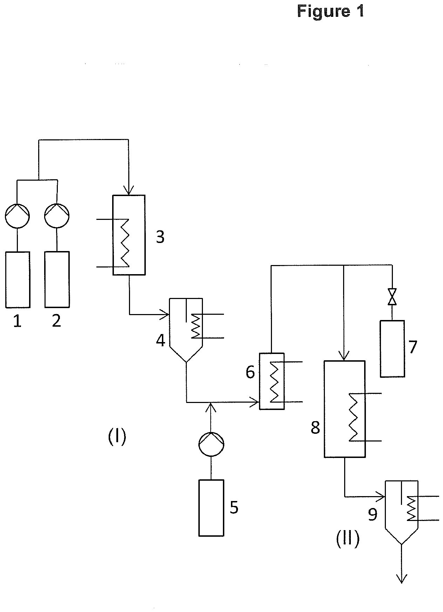

Figure 1 shows a process flow diagram according to an embodiment of the invention. The processes in reaction steps I and II are independent of one another and they are described sequentially.

In reaction step I SiCl₄ is dispensed from a thermostated container 1 and HMDS (hexamethyldisilazane) from a thermostatic container 2 into reactor 3. Due to dosaging regimes and the flow guidance, a stoichiometric excess of SiCl₄ vis-à-vis HMDS of at least 2:1 is ensured in the entire reaction space.

The reaction temperature is adjusted by means of an external heat-transfer medium to be between 100°C and 300°C. The total pressure in reactor 3 is between 0.1 mbar and 50 bar. Pressure and temperature are adjusted such that the partial pressures of the starting compounds SiCl₄ and HMDS and of the intermediate Cl₃SiNHSiMe₃ exceed the respective saturated vapor pressures. Under these conditions, the intermediate is removed from the reaction volume and mixed with an inert solvent 5.

As an alternative, the intermediate of reactor 3 is conducted through a phase separator 4 in which pressure and temperature are adjusted such that the partial pressures of the starting compounds SiCl₄ and HMDS are less than the respective saturated vapor pressures, but in which the partial pressure of the intermediate Cl₃SiNHSiMe₃ exceeds its saturated vapor pressure before the intermediate is mixed with an inert solvent 5.

The intermediate diluted in the solvent is introduced into an evaporator 6. As an alternative, an additional stream of inert carrier gas, for instance, N₂, He, Ar, CO₂, can be introduced into the evaporator simultaneously with the diluted intermediate stream. The temperature in the evaporator is adjusted by means of an external heat-transfer medium to be between -100°C and 300°C. The total pressure in the evaporator 6 is between 0.1 mbar and 2 bar.

Pressure and temperature are each adjusted such that the partial pressures of the intermediates and solvents are undercut. In reaction step 2 BCl₃ from thermostated container 7, is added in excess to the stream exiting the evaporator. The combined stream is directed into the reactor 8. Pressure and temperature in reactor 8 are adjusted such that BCl₃ is present in a gaseous form. The product blend is transferred to a phase separator 9 in which the product is recovered in solution of the inert solvent.

Solvent additions of 40% and more are preferred and further solvents having boiling points similar to the educts and products. Thereby, in further reaction steps such as aminolysis the solvent must not react, either.

The phase separator 9 may work according to the principle of mechanical separation, such as impact separator or cyclone. However, also thermal or physico-chemical separation methods may be used. The product may, e.g. be condensed. The product mixture may be regained in pure form or in solution via destillation/rectification or pervaporation. Alternatively, the liquid product mixture may undergo a purification process consisting of washing with an inert solvent and thus be freed of excess BCl₃ from carrier gas and/or low-boiling byproducts. Gas washing may also be applied for this purpose.

The product yield of TADB over both steps is at least 50% relating to the HMDS applied. In this case, the yield is based on the TADB fraction obtained after fractional destillation of low-boiling BCl₃, the intermediate product and the solvent.

## Claims

1. A silazane cleavage method,
**characterised in that**
an inert solvent having a boiling point of not less than the boiling point of the product minus 50K is added.

2. The silazane cleavage method according to claim 1 comprising two silazane cleavage reactions for the production of a compound which comprises the structural feature B-N-Si,
comprising the steps
reacting a silazane compound, in particular a compound of the formula (3)
R²₃SiNR¹Si R³₃,
in which R² and R³ in each case mutually independently represent a hydrocarbon residue with 1-20 carbon atoms and R¹ represents hydrogen or a hydrocarbon residue with 1-20 C atoms, with a compound of the formula (2) selected from
SiHal_{4-y}R_{y},
in which y = 0, 1 or 2, Hal is selected from F, Cl, Br and I, and R represents hydrogen or a hydrocarbon residue with 1 to 20 C atoms in liquid state and thereafter with
a compound of the formula (4) selected from
BHal₃₋ₓRₓ,
in which x = 0 or 1, Hal is selected from F, Cl, Br and I, and R represents hydrogen or a hydrocarbon residue with 1-20 C atoms with addition of an inert solvent.

3. The method according to claim 1,
**characterised in that**
a silazane compound having at least one Si-N-bond is reacted with at least one compound of the formula (2) selected from SiHal_{4-y}R_{y}, BHal₃₋ₓRₓ, AlHal₃₋ₓRₓ, GaHal₃₋ₓRₓ, InHal₃₋ₓRₓ, GeHal_{4-y}R_{y}, PHal₃₋ₓRₓ, PHal_{5-z}R_{z}, TiHal_{4-y}R_{y}, ZrHal_{4-y}R_{y}, VHal₃₋ₓRₓ, VHal_{4-y}R_{y}, NbHal_{5-z}R_{z}, TaHal_{5-z}R_{z}, CrHal₃₋ₓRₓ, MoHal_{4-y}R_{y}, MoHal_{5-z}R_{z}, WHal_{6-z}R_{z}, FeHal₃₋ₓRₓ or ZnCl₂
in which x = 0 or 1, y = 0, 1 or 2 and z = 0, 1, 2 or 3, Hal is selected from F, Cl, Br and I, and R represents hydrogen or a hydrocarbon residue having 1 to 20 C atoms
to form a compound which comprises the structural feature N-Y, in which Y is in each case independently selected from B, Al, Ga, In, Si, Ge, P, Ti, Zr, V, Nb, Ta, Cr, Mo, W, Fe or Zn.

4. The method according to claim 1 or 3 comprising two silazane cleavage reactions for the production of a compound which comprises the structural feature X-N-Y, in which X and Y are in each case independently selected from B, Al, Ga, In, Si, Ge, P, Ti, Zr, V, Nb, Ta Cr, Mo, W, Fe or Zn,
comprising the steps
reacting a silazane compound, in particular a compound of the formula (3)
R²₃SiNR¹Si R³₃,
in which R² and R³ in each case mutually independently represent a hydrocarbon residue with 1-20 carbon atoms and R¹ represents hydrogen or a hydrocarbon residue with 1-20 C atoms, with a compound of the formula (2) selected from
SiHal_{4-y}R_{y}, BHal₃₋ₓRₓ, AlHal₃₋ₓRₓ, GaHal₃₋ₓRₓ, InHal₃₋ₓRₓ, GeHal_{4-y}R_{y}, PHal₃₋ₓRₓ, PHal_{5-z}R_{z}, TiHal_{4-y}R_{y}, ZrHal_{4-y}R_{y}, VHal₃₋ₓRₓ, VHal_{4-y}R_{y}, NbHal_{5-z}R_{z}, TaHal_{5-z}R_{z}, CrHal₃₋ₓRₓ, MoHal_{4-y}R_{y}, MoHal_{5-z}R_{z}, WHal_{6-z}R_{z}, FeHal₃₋ₓRₓ or ZnCl₂
in which x = 0 or 1, y = 0, 1 or 2 and z = 0, 1 or 3, Hal is selected from F, Cl, Br and I, and R represents hydrogen or a hydrocarbon residue with 1 to 20 C atoms,
and a compound of the formula (4) selected from
BHal₃₋ₓRₓ, SiHal_{4-y}R_{y}, AlHal₃₋ₓRₓ, GaHal₃₋ₓRₓ, InHal₃₋ₓRₓ, GeHal_{4-y}R_{y}, PHal₃₋ₓRₓ, PHal_{5-z}R_{z}, TiHal_{4-y}R_{y}, ZrHal_{4-y}R_{y}, VHal₃₋ₓRₓ, VHal_{4-y}R_{y}, NbHal_{5-z}R_{z}, TaHal_{5-z}R_{z}, CrHat₃₋ₓRₓ, MoHal_{4-y}R_{y}, MoHal_{5-z}R_{z}, WHal_{6-z}R_{z}, FeHal₃₋ₓRₓ or ZnCl₂
in which x = 0 or 1, y = 0, 1 or 2 and z = 0, 1, 2 or 3, Hal is selected from F, Cl, Br and I, and R represents hydrogen or a hydrocarbon residue having 1 to 20 C atoms.

5. The method according to claim 2 or 4,
**characterised in that**
a compound of the formula (1)
R_{y}Hal_{3-y}Si-NR¹-BRₓHal₂₋ₓ
is produced, wherein SiHal_{4-y}R_{y} is used as the compound of the formula (2) and BHal₃₋ₓRₓ is used as the compound of the formula (4).

6. The method according to claim 4 or 5,
**characterised in that**
a compound of the formula (3) is reacted first with a compound of the formula (2) and thereafter in a further stage with a compound of the formula (4).

7. The method according to any of the preceding claims, **characterised in that**
the inert solvent has a boiling point of not less than the boiling point of the product.

8. The method according to any of the preceding claims, **characterised in that**
that the inert solvent has a boiling point of ≥ 30°C.

9. The method according to any one of the proceeding claims, **characterised in that**
the inert solvent is an organic solvent selected from hydrocarbons having at least 5 C-atoms.

10. The method according to any one of the preceding claims, **characterised in that**
the inert solvent is an organic solvent selected from C₅-C₃₀ alkanes and aromatic compounds, in particular from pentane, hexane, heptane, octane and toluol.

11. The method according to any one of the preceding claims, **characterised in that**
it is carried out continuously, semi-continuously or batch-wise.

12. The method according to any one of the preceding claims, **characterised in that**
the reaction is carried out at temperatures of -100°C to 300°C and/or a pressure of 0.1 mbar to 100 bar.

13. A method according to any one of the preceding claims, **characterised in that**
the reaction with compounds of the formula (2) is carried out at a temperature of > 20°C, in particular ≥ 50°C.

14. A method according to any one of the preceding claims, **characterised in that**
the silazane compound is reacted with an excess of compounds of the formula (2).

15. A method according to any one of the preceding claims, **characterised in that**
the byproduct R₃SiHal is separated off by the inert solvent.

16. A method according to any one of the preceding claims, **characterised in that**
the compound CH₃Cl₂SiNHBCl₂ (MADB), Cl₃SiNHBCl₂ (TADB), (CH₃)₂ClSiNHBCl₂ (DADB), Cl₃SiNCH₃BCl₂ (DMTA) or CH₃Cl₂SiNCH₃BCl₂ (DDMA) is produced.
